# EUROPEAN PATENT SPECIFICATION

(11) **EP 4 283 046 B1**
(45) Date of publication and mention of the grant of the patent: **25.02.2026**
(21) Application number: 23175914.3
(22) Date of filing: 29.05.2023
(51) Int. Cl.: E01F 13/02, G05D 1/00

(54) **ROUGH-TERRAIN WHEELED VEHICLE**
RADFAHRZEUG MIT RAUER GELÄNDEGÄNGIGKEIT
VÉHICULE À ROUES RUGUEUSES POUR TERRAIN

(30) Priority: 27.05.2022 PT 2022118010
(43) Date of publication of application: 29.11.2023
(73) Proprietor: Bold Robotics, Lda, 3030-199 Coimbra (PT)
(72) Inventor: PAIS VIEGAS, Carlos Xavier, 3030-508 Coimbra (PT); ESTEVES GAMEIRO, José Adelino, 6060-101 Idanha-a-Nova (PT)
(74) Representative: Patentree

(56) References cited:
- CN-A- 113 699 910
- CN-B- 111 173 363
- DE-A1- 102005 030 922
- US-A1- 2022 024 486

## Description

### TECHNICAL FIELD

The present disclosure relates to a rough terrain wheeled vehicle, namely a vehicle for stopping material projection from vegetation management works.

### BACKGROUND

Clearing and vegetation management works around road lanes and railroad tracks are of utmost importance, not only aesthetically, but mostly for the infrastructure's preservation and protection.

They are typically made using a clearing saw and a protective screen, which shields both walking passers-by and passing vehicles from any material projections. This forces the operation to include two workers whose sole job is to hold the protective screen while following the clearing worker.

This work is not only physically and psychologically strenuous, but also carries a real risk factor for the workers, as they are subject both to the very projections that the protective screen is protecting others from and to the passing vehicles, which presents a real runover hazard.

Since these clearing works are performed on rough terrain it is hard to get a technical solution to adapt to changing topographies and maintaining the protection of material projections.

The document US2022024486A1 discloses a collaborative autonomous ground vehicle or robot for traversing a ground surface. The robot is a wheeled vehicle which includes two camera groups and other sensors to sense the environment in which the robot operates. The robot includes a control system configured to operate in a teach mode to learn a route by either following a person or preceding a person and to store the learned route as a taught route. The control system is configured for identifying persons and objects, such as obstacles, within the fields of view of the camera groups. When the robot is in its repeat mode it will take the taught route over the ground surface and take appropriate action if an obstacle is identified in the field of view. This document does not disclose a vertical protective screen for stopping material projection from vegetation maintenance works, nor front and rear extendable arms for attaching and supporting the protective screen.

The document CN113699910A discloses a road closure vehicle which comprises a road closure vehicle body; a moving assembly is arranged at the bottom of the road closure vehicle body; and a warning module is arranged on the side wall of the road closure vehicle body. This document does not disclose a vertical protective screen, it discloses a warning panel. It does not disclose front and rear extendable arms for attaching and supporting the protective screen, nor an outwardly-facing camera for obstacle detecting at an outward end of each extendable arm.

The document DE102005030922A1 discloses a withdrawable cut-off system which comprises at least one column formed by a vertical spring shaft secured at the top and the bottom and stabilized by a frame support construction. This construction holds the cut-off material under tension when outwardly drawn or backwardly rolled. A core shaft is formed around the spring shaft, wound under specific tension and fixed to it. Two disks are fixed at the top and bottom horizontally to the core shaft and the spring shaft and by means of a special closure piece at the commencement of the cut-off material permit the material to be pulled out and backwardly rolled manually. They also serve for fixture to a cut-off material accommodation counter piece. This document does not disclose a vertical protective screen, it discloses a movable fence for preventing pedestrian access. It does not disclose front and rear extendable arms for attaching and supporting the protective screen, nor an outwardly-facing camera for obstacle detecting at an outward end of each extendable arm.

The document CN111173363B discloses an isolation shielding device designed for electric power emergency repairs. It comprises stand columns, a base, a retaining cloth, folding mechanisms, and a rack and pinion mechanism. The stand column is hollow, with a base at the bottom for stability. Folding mechanisms are located at the top and bottom of the stand column to vertically spread the retaining cloth. This device addresses issues of complicated installation and inconvenient transportation associated with existing isolation shielding devices. This document does not disclose a rough-terrain wheeled vehicle comprising front and rear extendable arms, nor an outwardly-facing camera for obstacle detecting at an outward end of each extendable arm.

These facts are disclosed in order to illustrate the technical problem addressed by the present disclosure.

### GENERAL DESCRIPTION

The invention relates to a rough-terrain wheeled vehicle as defined in claim 1.

The present invention relates to a rough-terrain wheeled vehicle comprising: a central body; and a vertical protective screen; wherein the central body comprises front and rear extendable arms for attaching and supporting the protective screen; the vehicle further comprising an outwardly-facing camera at an outward end of each extendable arm, wherein the outwardly-facing camera is an obstacle detecting camera to detect obstacles in the path of the vehicle.

In an embodiment, each extendable arm is slidably connected to the central body.

In an embodiment, each extendable arm comprises a support for attaching and supporting the protective screen, wherein each extendable arm and respective support are rotatably connected.

In an embodiment, the support is a vertical support and comprises a bar attached to the vertical support for fixing to the respective extendable arm.

In an embodiment, the rough-terrain wheeled vehicle further comprises a suspension system comprising a central body and a lateral body, said suspension system comprising:
a damper comprising a spring and a shock absorber for absorbing mechanical shocks, arranged between a first end and a second end, said ends comprising respective first and second rotatable joints for coupling to the central body;
a third and a fourth rotatable joints for mounting on the lateral body;
a first rigid arm attached between the first and fourth rotatable joints;
a second rigid arm attached between the second and third rotatable joints;
wherein the joints are arranged for the first and second rigid arms to cross.

In an embodiment, the first and second rotatable joints are slidably coupled to the central body.

In an embodiment, the central body comprises a track for slidably receiving the first and second rotatable joints.

In an embodiment, the suspension system further comprises a shaft rotatably coupling the central and lateral bodies.

In an embodiment, the suspension system further comprises a nut for adjusting the compression of the spring.

In an embodiment, a rough-terrain wheeled vehicle is provided with a vertical protective screen comprising said suspension system.

In an embodiment, the rough-terrain wheeled vehicle further comprises a plurality of independent motors for independently driving vehicle wheels.

In an embodiment, the rough-terrain wheeled vehicle further comprises a set of sensors for detecting people and/or obstacles in the vehicle's surroundings.

In an embodiment, the set of sensors comprises a plurality of vision depth sensors, a UV sensor, a satellite position system, and a physical marking sensor.

In an embodiment, the UV sensor is an UV camera.

In an embodiment, the UV sensor is configured to detect an UV light emission from an UV beacon.

In an embodiment, the UV beacon comprises a plurality of UV lights, preferably UV LEDs.

In an embodiment, the UV beacon represents a following point for the vehicle autonomously follow.

In an embodiment, the UV sensor is configured to follow the movement of the UV beacon. Preferably, the UV beacon is attached to the apparel of an operator.

In an embodiment, the rough-terrain wheeled vehicle further comprises a communication system for stablishing a communication link with a remote server and/or with a controller for guiding the vehicle.

As an illustrative example, the rough-terrain wheeled vehicle further comprises a portable vertical enclosure with an articulated arm for supporting a protection screen.

In an embodiment, the central body of said vehicle comprises a front and rear extending arm, and two vertical supports for attaching and supporting the protective screen.

According to the invention, the rough-terrain wheeled vehicle comprises a camera at each end of the extending arm.

In an embodiment, the extending arm has a U-shaped cross section, and the vertical support has a squared-shaped cross section for fitting in the extending arm.

In an embodiment, the rough-terrain wheeled vehicle further comprises lateral cameras for detecting people and/or obstacles in the vehicle's surroundings.

In an embodiment, the rough-terrain wheeled vehicle further comprises a visual and/or sound signal for signalling the presence of the vehicle.

In an embodiment, the visual signal is a light, an array of lights, a LED display, or a reflective strip.

In an embodiment, the sound signal is a buzzer, a pre-recorded voice message, or a sound speaker.

In an embodiment, the protective screen is a canvas, a fabric, or a thin fabric mesh.

In an embodiment, the rough-terrain wheeled vehicle further comprises lights to illuminate the vehicle's surroundings.

In an embodiment, the rough-terrain wheeled vehicle further comprises a battery and socket for charging electrical devices, thus acting as a mobile charging station.

In an embodiment, the rough-terrain wheeled vehicle further comprises a storage for transporting tools, materials, and/or a protective screen.

In an embodiment, the rough-terrain wheeled vehicle further comprises an aluminium and carbon fibre chassis.

It is also disclosed a rough-terrain wheeled vehicle not corresponding to the invention, comprising a vertical protective screen, an image, or a magnetic, or a radiofrequency sensor, and a suspension system, wherein the vehicle is configured to follow a physical marker or markers, from signals acquired by said sensor, in particular the sensor being a UV camera and the physical marker being a UV beacon or beacons, further in particular a UV wearable beacon.

It is further disclosed a method not corresponding to the invention for manufacturing a suspension system for a rough terrain wheeled vehicle comprising a central body and a lateral body, said method comprising:
providing a damper comprising a spring and a shock absorber for absorbing mechanical shocks, arranged between a first end and a second end;
mounting first and second rotatable joints to respective first and second ends of the damper, for coupling to the central body;
mounting a third and a fourth rotatable joints on the lateral body;
attaching a first rigid arm between the first and fourth rotatable joints;
attaching a second rigid arm between the second and third rotatable joints;
wherein the joints are arranged for the first and second rigid arms to cross.

In an embodiment, the method for manufacturing a rough terrain wheeled vehicle comprising said suspension system, comprising the step of mounting said suspension system onto the vehicle.

It is also disclosed the use of said vehicle for vegetation maintenance works.

As an illustrative example, a method for setting up a protective screen comprising the steps:
assembling the enclosure vertically on the vehicle;
locking the enclosure in a vertical position;
extending the articulated arms with the protective screen attached.

In another embodiment, the method for setting up a protective screen comprises the steps:
extending the extending arms;
placing the vertical supports from the extending arms to a vertical position;
fixing the vertical supports to the extending arms with a bar.

### BRIEF DESCRIPTION OF THE DRAWINGS

The following figures provide preferred embodiments or illustrative examples for illustrating the disclosure and should not be seen as limiting the scope of invention.
**Figure 1****:** Schematic representation of an embodiment of a vehicle comprising two pairs of wheels connected with the central body.
**Figure 2****:** Schematic representation of a side view of a vehicle's central body without a pair of wheels.
**Figure 3****:** Schematic representation of a low-angle view of a vehicle's central body without a pair of wheels.
**Figure 4****:** Schematic representation of the suspension mechanism.
**Figure 5****:** Schematic representation of an illustrative example useful for understanding the disclosure comprising a vehicle with a protective screen assembled on top.
**Figure 6****:** Schematic representation of an illustrative example useful for understanding the disclosure of one lateral perspective comprising a vehicle with a protective screen assembled on top.
**Figure 7****:** Schematic representation of a top view of a vehicle with a protective screen assembled on top.
**Figure 8****:** Schematic representation of an illustrative example useful for understanding the disclosure of another lateral perspective comprising a vehicle with a protective screen assembled on top.
**Figure 9****:** Schematic representation, with a top-left (A) and bottom-right (B) areas highlighted, of an embodiment of a protective screen with two flaps assembled on top of a vehicle.
**Figure 9A****:** Schematic representation, of the top-left (A) area, of an embodiment of attaching means.
**Figure 9B****:** Schematic representation, of the bottom-right (B) area, of an embodiment of supporting means.
**Figure 10****:** Schematic representation of an embodiment of a vehicle with a protective screen collapsed and stored.

### DETAILED DESCRIPTION

A rough-terrain wheeled vehicle according to the present invention is characterised by the features recited in claim 1. It is also disclosed a vehicle with a protective screen for stopping material projection from vegetation maintenance works.

In an embodiment, the vehicle comprises a support for a protective screen of such clearing jobs, it is totally electric, and has an array of sensors that allow it to follow the clearing worker.

In an embodiment, the vehicle's chassis is built in aluminium and carbon fibre, to ensure a superior resistance to the natural elements while maintaining its total mass to a minimum.

In an embodiment, the vehicle has a low weight, preferably up to 70kg, and small dimensions, preferably 1.2 m long and 0.4 m wide. Thus, allowing it to be transported, for example, in a commercial van.

In an embodiment, the vehicle is locally assembled in an easy and quick fashion, needing only one worker to do it and less than 2 minutes.

In an embodiment, the vehicle is controlled remotely by another operator or autonomously following a worker.

In an embodiment, the vehicle receives a pre-determined path to follow, preferably using GPS coordinates. In a further embodiment, the movement of the vehicle is limited to the pre-determined path, alternatively by geo-fencing a narrow long stripe comprising said path.

In another embodiment, the vehicle moves along a physical reference, such as a ribbon comprising a plurality of distributed of visual/magnetic/RF (radiofrequency) markers.

In an embodiment, the vehicle is further configured to signal the working operations, further enhancing the worker's safety, wherein the signal is a visual signal e.g., an array of lights, display an alert message, or a sound signal, e.g., a buzzer, a pre-recorded voice alert.

In an embodiment, the vehicle is further configured to be deployed for various different tasks, such as the transportation of tools and/or heavy materials.

In an embodiment, the vehicle is totally electric, hence non-polluting while in use, and is able to carry the worker's tools, such as clearing saws, weed cutter, or a brush cutter.

In an embodiment, the vehicle has a robust structure to operate in various environments and under different conditions of luminosity.

In an embodiment, the vehicle is to be connected online, which allows for a remote monitoring of the works and their progress, and also preprograming of trajectories and remote control of the vehicle.

In an embodiment, the vehicle comprises two independent stereo Vision depth sensors, a UV sensor, a GPS RTK, physical marking sensors, high luminance LEDs, reflective strips and sound speakers, a suspension.

In an embodiment, the two independent stereo vision depth sensors are mounted in the opposite ends of the vehicle, for the 3D detection and localization of obstacles in the vehicle path.

In an embodiment, the two independent stereo vision depth sensors detect incoming vehicles and warn the workers.

In an embodiment, the worker possesses an array of UV LEDs on him, preferably on his helmet, which allows the UV sensor mounted on the vehicle to see him.

In an embodiment, the UV LEDs wavelength is about 400 nm.

In an embodiment, the UV sensor is configured for a 3D detection and localization of an array of UV LEDs on a helmet for following a clearing worker wearing said helmet.

The UV lights suffer less from lighting variations in the environment, so it is a more reliable solution for worker detection, as well as is less demanding from a computational point of view.

In an embodiment, the GPS RTK comprises a GPS tower mounted locally for a centimetre-level precise localization and navigation.

In an embodiment, the physical marking sensors are configured to follow physical markers along a user-predefined trajectory for allowing operations in localizations where there is no GPS signal, such as tunnels.

In an embodiment, the high luminance LEDs, reflective strips, and sound speakers are configured for signalling the presence of the vehicle and the clearing's operations.

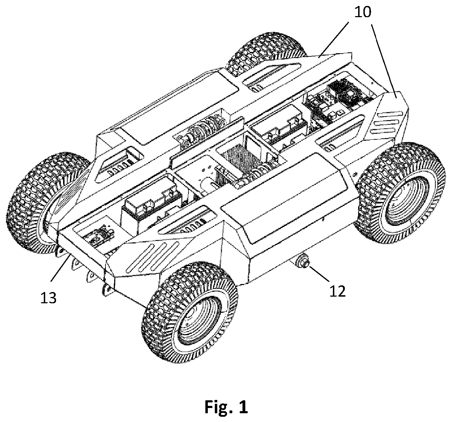

**Figure 1** shows a schematic representation of an embodiment of a vehicle comprising two pairs of wheels connected with the central body, wherein **10** represents a pair of wheels, **12** represents a rotating rod, and **13** represents central body.

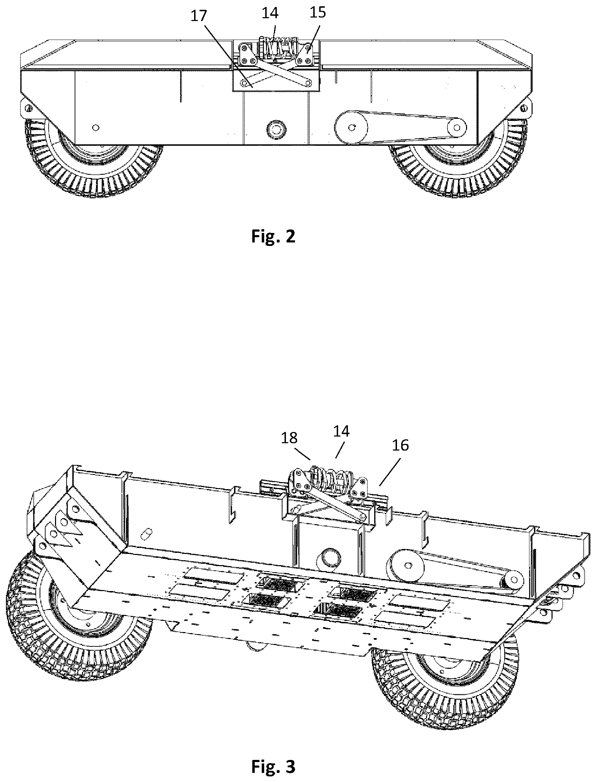

**Figure 2** shows a schematic representation of a side view of a vehicle's central body without a pair of wheels, wherein **14** represents a damper, **15** represents a sliding joint, and **17** represents an arm.

In the small rotation (22) and the 30° rotation (24), a damper is displaced and compressed, thus reducing its length.

In an embodiment, the suspension system, for rough terrain operations, comprises two pairs of wheels (10) to rotate around an axis (12) and connecting to a central body (13).

In an embodiment, the pair of wheels (10) of the suspension system rotate in relation to the central body (3), causing a displacement of the shock-absorbing damper (14) in the rail (16), as well as a compression of it. The greater the relative rotation angle between the pair of wheels (10) and the central body (13), the greater the compression of the damper (14), therefore, the greater the force it exerts to return to the situation of equilibrium with the central body (13) aligned with the pair of wheels (10).

This suspension system allows the vehicle to overcome obstacles, keep horizontally stable the central body (13), and consequentially the protective screen also stays always upright. The gas and spring damper (14) absorbs the irregularities of the terrain. It also allows an independent suspension to the two pairs of wheels (10) of the vehicle.

This suspension system consists of a damper, e.g., a gas damper and spring (14) damper, for absorbing mechanical shocks. The ends of the damper are connected to two points by means of sliding joints (15). One point is a sliding joint that slides on a rail (16), attached to the central body (13). The second point is an arm (17) that connects to a pair of wheels (10). These connections allow a degree of freedom, being that of rotation about the axis that passes through the connection point and is perpendicular to the plane of the sliding joints (15) and of mounting the damper (14).

**Figure 3** shows a schematic representation of a low-angle view of a vehicle's central body without a pair of wheels, wherein **14** represents a damper, **16** represents a rail, and **18** represents a nut.

In an embodiment, the gas and spring damper (14) allows, by means of a nut (18), to adjust the compression of a spring damper, and thus to regulate the force of the suspension, depending on the vehicle load and the desired behaviour. This adjustment can be made without having to disassemble any component of the vehicle.

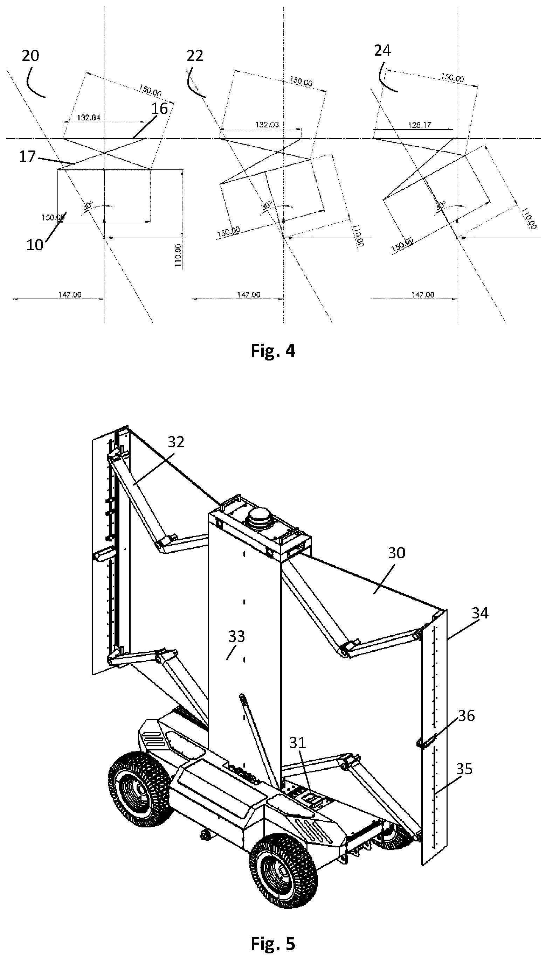

**Figure 4** shows a schematic representation of the suspension mechanism, wherein **10** represents a pair of wheels, **17** represents an arm, **14** represents a damper, **20** represents a no-rotation of a pair of wheels in relation to a central body, **22** represents a small rotation of a pair of wheels in relation to a central body, and **24** represents a full rotation of 30° of a pair of wheels in relation to a central body.

In an embodiment, the pair of wheels comprises a belt for doing the transmission from the motor to the rear wheel and a second belt that transmits the movement from the rear wheel to the front wheel.

In an embodiment, the vehicle comprises compartments to safely store working materials, tools, and equipment.

In an embodiment, the vehicle comprises an electric plug for the charging of electric devices, such as clearing saws.

The present solution allows the replacement of a monotonous and potentially dangerous work that requires two workers, freeing these resources for other, more meaningful tasks.

**Figure 5** shows a schematic representation of an illustrative example useful for understanding the disclosure comprising a vehicle with a protective screen assembled on top, wherein **30** represents a protective fabric, **31** represents a locking mechanism, **32** represents articulated arms, **33** represents an enclosure, **34** represents side lids, **35** represents warning lights, and **36** represents a camera.

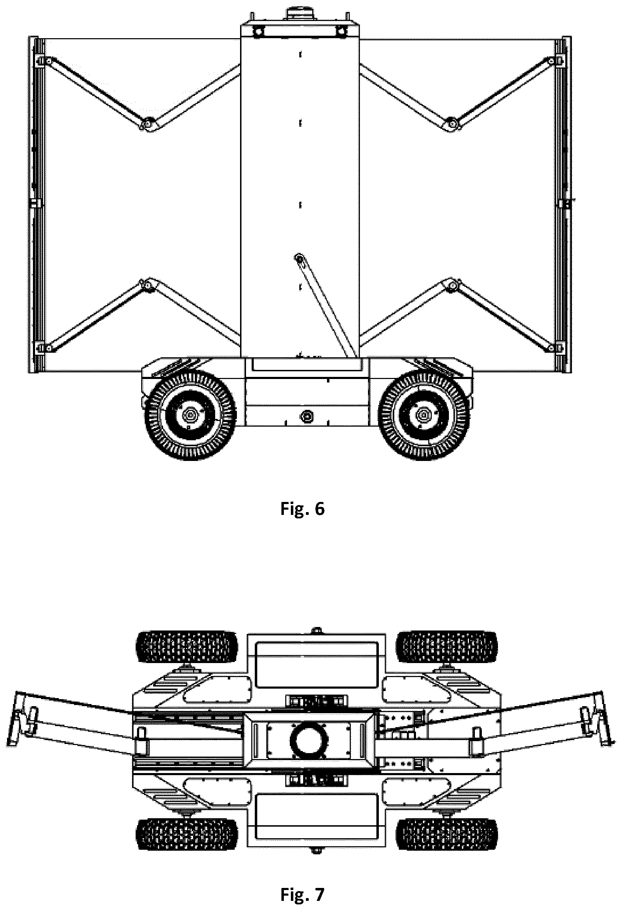

**Figure 6** shows a schematic representation of an illustrative example useful for understanding the disclosure of one lateral perspective comprising a vehicle with a protective screen assembled on top.

**Figure 7** shows a schematic representation of a top view of a vehicle with a protective screen assembled on top.

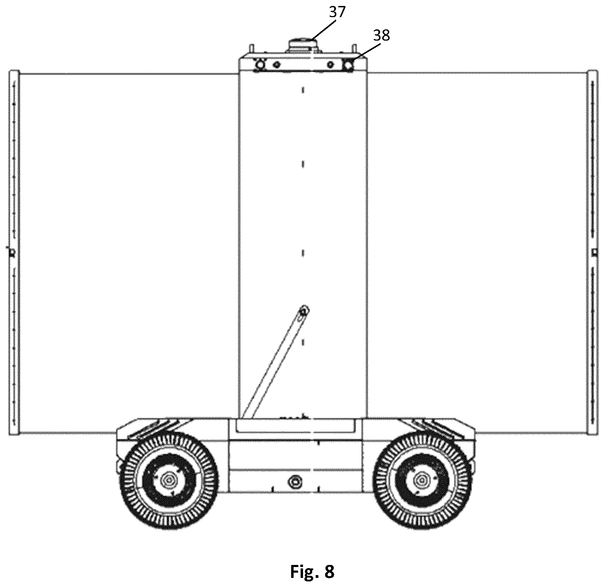

**Figure 8** shows a schematic representation of an illustrative example useful for understanding the disclosure of another lateral perspective comprising a vehicle with a protective screen assembled on top wherein **37** represents a warning beacon, and **38** represents lateral cameras.

As an illustrative example, the assembly of a protective screen on the vehicle's top comprises a protective fabric (30) is contained within an enclosure (33), which lies horizontally on the central body (13) of the vehicle and is manually raised to a vertical position. A locking mechanism (31) locks the enclosure in this vertical position. Then four articulated arms (32) are extended, two in each direction, extending the protective screen, in a similar fashion to a retractable awning. The articulated arms (32) are connected both to the enclosure (33) and the side lids (34).

In an embodiment, the extension is manual or fully automatic, by means of small servo motors.

As an illustrative example, the side lids (34) have warning lights (35), for instance LED strips, to signal the presence of the vehicle, as well as a camera (36) to detect obstacles in the path of the vehicle.

As an illustrative example, on the top of the enclosure (33) there is a space for electronics, a warning beacon (37) and lateral cameras (38) for the detection and 3D localization of the operator.

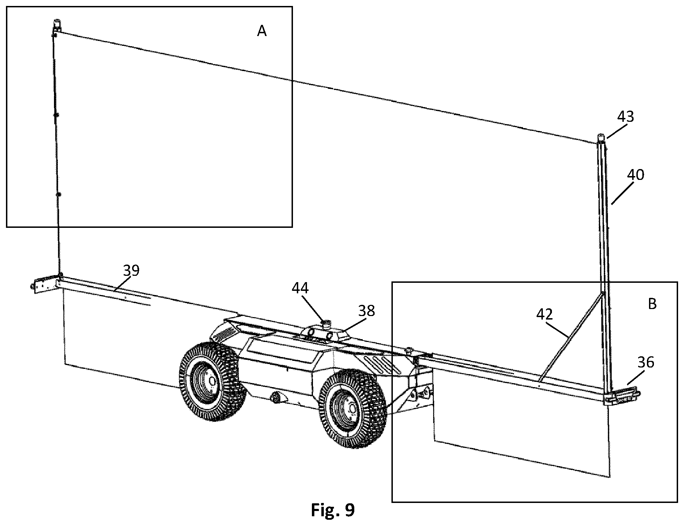

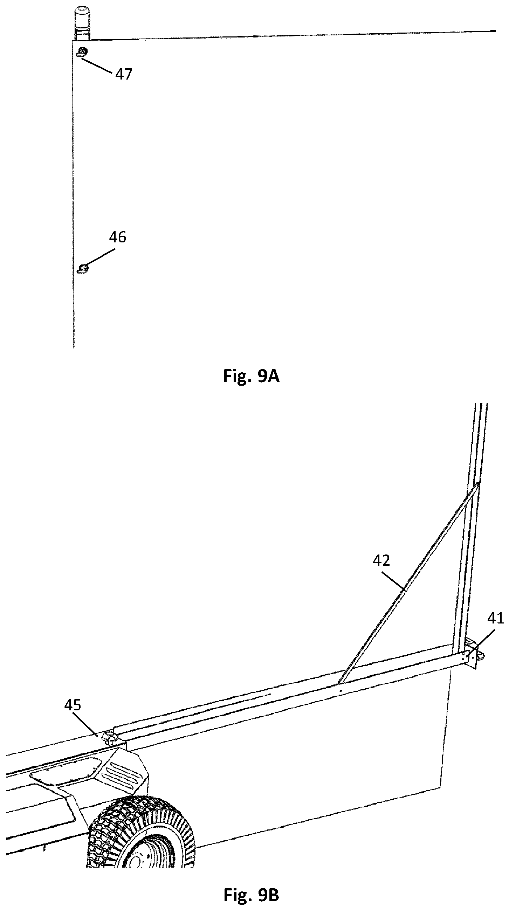

**Figure 9** shows a schematic representation, with a top-left (A) and bottom-right (B) areas highlighted, of an embodiment of a protective screen, with two flaps, assembled on top of a vehicle, wherein **36** represents a set of front/rear cameras, **38** represents lateral cameras, **39** represents extending arms, **40** represents the vertical support, **42** represents a bar, **43** represents a warning beacon, and **44** represents a stop button.

**Figure 9A** shows a schematic representation, of the top-left (A) area, of an embodiment of attaching means, wherein **46** represents a washer, and **47** represents an attaching pin.

**Figure 9B** shows a schematic representation, of the bottom-right (B) area, of an embodiment of supporting means, wherein **41** represents a vertical support pin, **42** represents a bar, and **45** represents an extending arm pin.

In another embodiment, the central body (13) comprises two extending arms (39) which project horizontally from the front and back of the vehicle. These arms contain a vertical support (40) each, which is attached to the extremity of the extending arms (39) by means of a vertical support pin (41), allowing it to rotate and be mounted vertically. A bar (42) is permanently attached to the vertical support (40) and can be fixed to the extending arms (39) to help support the vertical support (40) once it is in vertical position.

In an embodiment, each vertical support (40) comprises a small warning beacon (43) to signal the presence of the vehicle, mounted on its extremity.

In this realization, obstacle detecting cameras (36) are located at the extremities of each extending arm (39). The operator detection and 3D localization cameras (38) are located on the central part (13) of the vehicle, further comprising an emergency stop button (44). An extending arm pin (45) can be inserted in the enclosure of the extending arms (39) to prevent them from retracting once the vehicle is moving.

In an embodiment, the vertical support (40) is a tube with a squared crosssection.

The protective screen (30) comprises a plurality of washers (46) stitched for attaching the protective screen (30) to a plurality of attaching pins (47) which are fixed in the vertical support (40).

The protective screen (30) comprises two flaps which are folded and can be unfolded to reach the ground, covering the part below the extending arms (39).

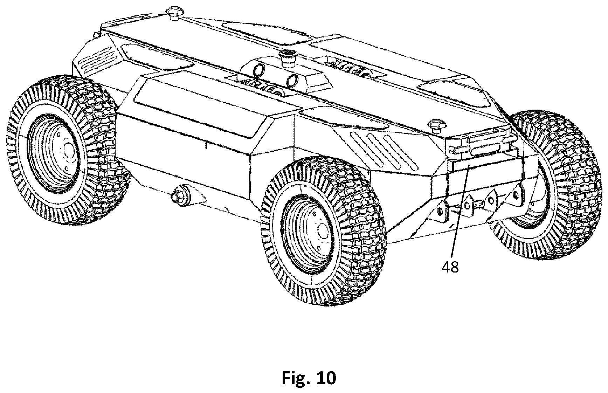

**Figure 10** shows a schematic representation of an embodiment of a vehicle with a protective screen collapsed and stored, wherein **48** represents a storage.

With the extending arms closed, the vehicle becomes very compact. The central body (13) comprises a storage (48) to store a folded protective screen (30).

Mobile and transportable charging station for electric vehicles, characterized by having a battery charging mechanism, either contact or contactless through coils.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof within the scope of the claims.

## Claims

1. Rough-terrain wheeled vehicle comprising:
a central body (13); and
a vertical protective screen (30);
wherein
the central body (13, 33) comprises front and rear extendable arms (39, 32) for attaching and supporting the protective screen (30);
the vehicle further comprising an outwardly-facing camera (36) at an outward end of each extendable arm;
wherein the outwardly-facing camera is an obstacle detecting camera to detect obstacles in the path of the vehicle.

2. Rough-terrain wheeled vehicle according to the previous claim wherein each extendable arm is slidably connected to the central body (13).

3. Rough-terrain wheeled vehicle according to any of the previous claims wherein each extendable arm comprises a support for attaching and supporting the protective screen (30), wherein each extendable arm and respective support are rotatably connected.

4. Rough-terrain wheeled vehicle according to the previous claim, wherein the support is a vertical support (40) and comprises a bar attached to the vertical support (40) for fixing to the respective extendable arm.

5. Rough-terrain wheeled vehicle according to any of the previous claims comprising a plurality of independent motors for independently driving vehicle wheels.

6. Rough-terrain wheeled vehicle according to any of the previous claims comprising a set of sensors for detecting people and/or obstacles in the vehicle's surroundings.

7. Rough-terrain wheeled vehicle according to the previous claim wherein the set of sensors comprises a plurality of vision depth sensors, a UV sensor, a satellite position system, and a physical marking sensor.

8. Rough-terrain wheeled vehicle according to the previous claim wherein the UV sensor is configured to detect an UV light emission from an UV beacon;
preferably, wherein the UV beacon represents a following point for the vehicle autonomously follow.

9. Rough-terrain wheeled vehicle according to any of the previous claims comprising a communication system for stablishing a communication link with a remote server and/or with a controller for guiding the vehicle.

10. Rough-terrain wheeled vehicle according to any of the previous claims wherein the extending arm has a U-shaped cross section, and the vertical support (40) has a squared-shaped cross section for fitting in the extending arm.

11. Rough-terrain wheeled vehicle according to any of the previous claims comprising lateral cameras (38) for detecting for detecting people and/or obstacles in the vehicle's surroundings.

12. Rough-terrain wheeled vehicle according to any of the previous claims further comprising a suspension system comprising; a central body (13) and a lateral body, said suspension system comprising:
a damper (14) comprising a spring and a shock absorber for absorbing mechanical shocks, arranged between a first end and a second end, said ends comprising respective first and second rotatable joints (15) for coupling to the central body (13);
a third and a fourth rotatable joints (15) for mounting on the lateral body;
a first rigid arm (17) attached between the first and fourth rotatable joints (15);
a second rigid arm (17) attached between the second and third rotatable joints (15);
wherein the joints (15) are arranged for the first and second rigid arms (17) to cross.

13. Rough-terrain wheeled vehicle according to any of the previous claims comprising a visual and/or sound signal for signalling the presence of the vehicle; preferably wherein the visual signal is a light, an array of lights, a LED display, or a reflective strip; and/or wherein the sound signal is a buzzer, a pre-recorded voice message, or a sound speaker.

14. Rough-terrain wheeled vehicle according to any of the previous claims wherein the protective screen (13) is a canvas, a fabric, or a thin fabric mesh.

15. Rough-terrain wheeled vehicle according to any of the previous claims comprising an aluminium and carbon fibre chassis.

## Patentansprüche

1. Geländegängiges Radfahrzeug, umfassend:
einen zentralen Körper (13); und
einen vertikalen Schutzschirm (30);
wobei
der zentrale Körper (13, 33) vordere und hintere Arme (39, 32) umfasst, die in ihrer Länge verstellbar sind und zur Befestigung sowie zum Halten des Schutzschirms (30) ausgebildet sind;
das Fahrzeug ferner eine nach außen gerichtete Kamera (36) an einem äußeren Ende jedes des in seiner Länge verstellbaren Arms umfasst;
wobei die nach außen gerichtete Kamera eine Kamera zum Erkennen von Hindernissen ist, die Hindernisse auf dem Weg des Fahrzeugs erkennt.

2. Geländegängiges Radfahrzeug nach dem vorangehenden Anspruch, wobei jeder in seiner Länge verstellbare Arm verschiebbar mit dem zentralen Körper (13) verbunden ist.

3. Geländegängiges Radfahrzeug nach einem der vorangehenden Ansprüche, wobei jeder in seiner Länge verstellbare Arm eine Halterung zur Befestigung und zum Halten des Schutzschirms (30) aufweist, wobei jeder in seiner Länge verstellbare Arm und die jeweilige Halterung drehbar verbunden sind.

4. Geländegängiges Radfahrzeug nach dem vorangehenden Anspruch, wobei die Halterung eine vertikale Halterung (40) ist und eine an der vertikalen Halterung (40) angebrachte Stange zur Befestigung an dem jeweiligen in seiner Länge verstellbaren Arm aufweist.

5. Geländegängiges Radfahrzeug nach einem der vorangehenden Ansprüche, umfassend eine Vielzahl unabhängiger Motoren für den unabhängigen Antrieb der Räder des Fahrzeugs.

6. Geländegängiges Radfahrzeug nach einem der vorangehenden Ansprüche, umfassend eine Reihe von Sensoren zum Erfassen von Personen und/oder Hindernissen in der Umgebung des Fahrzeugs.

7. Geländegängiges Radfahrzeug nach dem vorangehenden Anspruch, wobei die Reihe von Sensoren eine Vielzahl von bildbasierten Tiefensensoren, einen UV-Sensor, ein Satellitenpositionssystem und einen Sensor zur Erfassung physischer Markierungen umfasst.

8. Geländegängiges Radfahrzeug nach dem vorangehenden Anspruch, wobei der UV-Sensor so konfiguriert ist, dass er ein von einer UV-Bake abgegebenes UV-Licht erfasst; wobei die UV-Bake bevorzugt einen Folgepunkt darstellt, dem das Fahrzeug autonom folgt.

9. Geländegängiges Radfahrzeug nach einem der vorangehenden Ansprüche, umfassend ein Kommunikationssystem zum Aufbau einer Kommunikationsverbindung mit einem externen Server und/oder mit einem Steuergerät zur Steuerung des Fahrzeugs.

10. Geländegängiges Radfahrzeug nach einem der vorangehenden Ansprüche, wobei der in seiner Länge verstellbare Arm einen U-förmigen Querschnitt aufweist und die vertikale Halterung (40) einen rechteckigen Querschnitt zum Einsetzen in den in seiner Länge verstellbaren Arm aufweist.

11. Geländegängiges Radfahrzeug nach einem der vorangehenden Ansprüche, umfassend seitliche Kameras (38) zum Erfassen von Personen und/oder Hindernissen in der Umgebung des Fahrzeugs.

12. Geländegängiges Radfahrzeug nach einem der vorangehenden Ansprüche, ferner umfassend ein Federungssystem, umfassend einen zentralen Körper (13) und einen seitlichen Körper, wobei das genannte Federungssystem umfasst:
einen Dämpfer (14), umfassend eine Feder und einen Stoßdämpfer zur Absorption mechanischer Stöße, die zwischen einem ersten Ende und einem zweiten Ende angeordnet sind, wobei die genannten Enden jeweils ein erstes und ein zweites drehbares Gelenk (15) zur Verbindung mit dem zentralen Körper (13) aufweisen;
ein drittes und ein viertes drehbares Gelenk (15) zur Befestigung am Seitenkörper;
einen ersten starren Arm (17), der zwischen dem ersten und dem vierten drehbaren Gelenk (15) angebracht ist;
einen zweiten starren Arm (17), der zwischen dem zweiten und dem dritten drehbaren Gelenk (15) angebracht ist;
wobei die Gelenke (15) so angeordnet sind, dass sich der erste und der zweite starre Arm (17) kreuzen.

13. Geländegängiges Radfahrzeug nach einem der vorangehenden Ansprüche, umfassend ein optisches und/oder akustisches Signal, um die Anwesenheit des Fahrzeugs zu signalisieren, wobei das optische Signal bevorzugt ein Licht, eine Reihe von Lichtern, eine LED-Anzeige oder ein reflektierender Streifen ist; und/oder wobei das akustische Signal ein Summer, eine vorher aufgezeichnete Sprachnachricht oder ein Lautsprecher ist.

14. Geländegängiges Radfahrzeug nach einem der vorangehenden Ansprüche, wobei der Schutzschirm (13) eine Plane, ein Gewebe oder ein dünnes Gewebenetz ist.

15. Geländegängiges Radfahrzeug nach einem der vorangehenden Ansprüche mit einem Fahrgestell aus Aluminium und Kohlefaser.

## Revendications

1. Véhicule à roues pour terrain accidenté comprenant :
un corps central (13) ; et
un écran protecteur vertical (30) ;
dans lequel
le corps central (13, 33) comprend des bras extensibles avant et arrière (39, 32) pour accrocher et soutenir l'écran protecteur (30) ;
le véhicule comprenant également une caméra tournée vers l'extérieur (36) à une extrémité extérieure de chaque bras extensible ;
dans lequel la caméra tournée vers l'extérieur est une caméra de détection d'obstacles pour détecter des obstacles se trouvant sur le chemin du véhicule.

2. Véhicule à roues pour terrain accidenté selon la revendication précédente dans lequel chaque bras extensible est raccordé de manière coulissante au corps central (13).

3. Véhicule à roues pour terrain accidenté selon l'une quelconque des revendications précédentes dans lequel chaque bras extensible comprend un support pour accrocher et soutenir l'écran protecteur (30), dans lequel chaque bras extensible et le support respectif sont raccordés de manière pivotante.

4. Véhicule à roues pour terrain accidenté selon la revendication précédente, dans lequel le support est un support vertical (40) et comprend une barre attachée au support vertical (40) destinée à être fixée au bras extensible respectif.

5. Véhicule à roues pour terrain accidenté selon l'une quelconque des revendications précédentes comprenant une pluralité de moteurs indépendants pour conduire de manière indépendante les roues du véhicule.

6. Véhicule à roues pour terrain accidenté selon l'une quelconque des revendications précédentes comprenant un ensemble de capteurs pour détecter des personnes et/ou des obstacles aux alentours du véhicule.

7. Véhicule à roues pour terrain accidenté selon la revendication précédente dans lequel l'ensemble de capteurs comprend une pluralité de capteurs de profondeur de vision, un capteur UV, un système de position de satellite, et un capteur de marquage physique.

8. Véhicule à roues pour terrain accidenté selon la revendication précédente dans lequel le capteur UV est configuré pour détecter une émission de lumière UV à partir d'un faisceau UV ;
préférablement, dans lequel le faisceau UV représente un point à suivre pour que le véhicule suive de manière autonome.

9. Véhicule à roues pour terrain accidenté selon l'une quelconque des revendications précédentes comprenant un système de communication pour établir un lien de communication avec un serveur distant et/ou avec une commande pour guider le véhicule.

10. Véhicule à roues pour terrain accidenté selon l'une quelconque des revendications précédentes dans lequel le bras extensible a une section transversale en forme de « U », et le support vertical (40) a une section transversale en forme de carré destinée à être attachée au bras extensible.

11. Véhicule à roues pour terrain accidenté selon l'une quelconque des revendications précédentes comprenant des caméras latérales (38) pour détecter des personnes et/ou des obstacles aux alentours du véhicule.

12. Véhicule à roues pour terrain accidenté selon l'une quelconque des revendications précédentes comprenant également un système de suspension comprenant ; un corps central (13) et un corps latéral, ledit système de suspension comprenant :
un amortisseur (14) comprenant un ressort et un absorbeur de choc pour absorber les chocs mécaniques, disposé entre une première extrémité et une seconde extrémité, lesdites extrémités comprenant les premier et second joints pouvant être pivotés respectifs (15) destinés à être accouplés au corps central (13) ;
un troisième et un quatrième joints pouvant être pivotés (15) destinés à être montés sur le corps latéral ;
un premier bras rigide (17) fixé entre les premier et quatrième joints pouvant être pivotés (15) ;
un second bras rigide (17) fixé entre les second et troisième joints pouvant être pivotés (15) ;
dans lequel les joints (15) sont disposés de manière que le premier et le second bras rigides (17) se croisent.

13. Véhicule à roues pour terrain accidenté selon l'une quelconque des revendications précédentes comprenant un signal visuel et/ou sonore pour signaler la présence du véhicule ; préférablement dans lequel le signal visuel est une lumière, un ensemble de lumières, un écran LED, ou une bande réfléchissante ; et/ou dans lequel le signal sonore est une alarme, un message vocal pré-enregistré, ou un haut-parleur.

14. Véhicule à roues pour terrain accidenté selon l'une quelconque des revendications précédentes dans lequel l'écran protecteur (13) est une toile, un tissu, ou une maille de tissu fine.

15. Véhicule à roues pour terrain accidenté selon l'une quelconque des revendications précédentes comprenant un châssis en aluminium et en fibre de carbone.
